# EUROPEAN PATENT SPECIFICATION

(11) **EP 2 443 324 B1**
(45) Date of publication and mention of the grant of the patent: **17.04.2013**
(21) Application number: 10727762.6
(22) Date of filing: 03.06.2010
(51) Int. Cl.: F01L 13/00, F01L 9/02, F01L 1/14, F01L 1/08, F02D 13/02

(54) **A CONTROL ARRANGEMENT FOR GAS EXCHANGE IN A PISTON ENGINE**
STEUERANORDNUNG FÜR GASWECHSELVENTIL IN EINEM KOLBENMOTOR
DISPOSITIF DE COMMANDE POUR DISTRIBUTION DANS UN MOTEUR A PISTON

(30) Priority: 17.06.2009 FI 20095683
(43) Date of publication of application: 25.04.2012
(73) Proprietor: Wärtsilä Finland Oy, 65380 Vaasa (FI)
(72) Inventor: SUNDSTEN, Magnus, FI-65610 Korsholm (FI)
(74) Representative: Veräjänkorva, Janne
(86) International application number: PCT/FI2010/050458
(87) International publication number: WO 2010/146229

(56) References cited:
- EP-A1- 1 936 132
- WO-A1-90/14505
- WO-A1-95/33919
- WO-A1-2008/000899
- DE-A1- 4 324 837
- DE-A1-102005 056 238
- FR-A- 971 641
- FR-A1- 2 676 501
- GB-A- 1 493 246
- JP-A- 52 131 021
- US-A- 3 490 423
- US-A- 5 002 022

## Description

The invention relates to a control arrangement for gas exchange in a piston engine according to the preamble of claim 1.

### Background art

Modern compression ignited piston engines are commonly provided with a supercharger, usually a turbocharger. Turbocharger arrangement is specifically advantageous since it utilizes energy of the exhaust gas of the engine. Hereby it is possible to increase the output and efficiency of the engine. However, in practise a turbocharger, the compressor of which being operated with the exhaust gas turbine, tends to be inefficient at low load operation conditions of the engine.

The operation of a turbocharger is influenced by the characteristics and adaptation of the interrelated compressor and turbine. Using high pressure ratios in the compressor i.e. using substantially high charge pressure in the intake system of the engine is beneficial. The operation of the compressor part of the turbocharger is restricted on one hand by the limit that corresponds to maximum flow capacity of the compressor and on the other hand by a so called surge margin. Surging of the compressor is detrimental to the operation of the engine, since the pressure and flow of the combustion air supplied to the engine will decrease as soon as the compressor surges.

An important issue relating to the operation of a turbocharged piston engine is valve timing. As an example of a device for accomplishing alterations in timing of the valve reference is made to document WO 9830787 A1. This known device for controlling the valves on an internal combustion engine makes it possible to delay the opening of the engine's valve and closing the valve earlier making the open time of the valve shorter. According to the document this may be used for both intake and exhaust valves but the document fails to disclose specific applications of such a device.

On the other hand WO 2008/000899A1 shows an arrangement for adjusting the closing moment of a gas exchange valve of a combustion engine making it possible to provide a delay in the closing of the valve so as to comply with different load situations of the engine, specifically low load situations, whereby the cylinders are not provided with enough air for self-ignition to take place during the compression stroke. This is specifically true as regards engines charged by high pressure such as two-stage turbo charged engines during engine start and during load variations. In engines of this kind higher pressures in combination with sharper or shorter cam nose forms are utilised resulting in charging action taking place in shorter time respectively. Hence, the opening times of the inlet valves under normal load of the engine are not long enough for such special situations whereby a delay function should be selectively available.

Another problem relating to low load situations in the operation of turbocharged four stroke internal combustion engine of the kinds referred above is the fact that the valves and the components relating thereto may get over heated due to inefficient scavenging of the cylinder.

An object of the invention is to provide a control arrangement for gas exchange in a piston engine, which solves the above mentioned and other problems of the prior art. It is also an object of the invention to provide a straightforward and reliable solution which improves gas exchange of a cylinder of a piston engine according to need so as to better comply with different load situations and improves the efficiency and reliability of the engine depending on the exact type of the engine and circumstances in each case.

### Disclosure of the invention

Objects of the invention can be met substantially as is disclosed in claim 1 and more specifically in the other claims.

The basic idea of the invention is to provide for more efficient scavenging of the cylinder to be utilised according to need. According to the invention the control arrangement includes means for adjusting timing of valve opening of the inlet valve, and said means are arranged to cooperate with the piston device included in the arrangement. By means of the improved scavenging surging can be avoided at full load situations. At low load situations, on the other hand, the invention provides for more efficient cooling of the valves and components related thereto.

Said means for adjusting are arranged to advance the time of opening of the inlet valve while the peak phase of the opening of the inlet valve remains at least substantially unchanged. Hereby it is possible to advance only the start of opening of the inlet valve for the improved scavenging, but in other respects the inlet valve may be open as normally. As a consequence also the possible delay function for closing of the valve may be utilised as desired independent on the scavenging.

In a practical embodiment the cam device is provided with a nose of asymmetric design so that it has a first portion extending along the cam profile of the cam device from its peak a distance which is substantially longer than a second portion extending in the opposite direction from the peak respectively. Then the beginning part of the first portion of the nose can with advantage be arranged to determine the advanced timing of valve opening of the inlet valve.

Further the guide member is provided with an auxiliary piston movably arranged between the guide member and the piston device and together with the guide member defining a chamber which can be selectively filled with hydraulic medium for determining the timing of valve opening of the inlet valve in each case. Hereby the advanced timing function can be selected as desired but also turned off.

In order to make use of the chamber the body part is provided with an inlet duct and an outlet duct spaced apart along the movement of the guide member and arranged in turn in communication with said chamber through a further flow duct arranged in the guide member.

Depending on the selected timing of valve opening of the inlet valve the auxiliary piston is a bit spaced apart from either the piston device or the guide member when the inlet valve is at its closed position. For selecting advanced timing of the valve opening of the inlet valve said chamber is filled with hydraulic medium during the closing time of the inlet valve. In this case there will be a gap between the auxiliary piston and the guide member to determine the advanced timing and increased scavenging until the pressure in the chamber is released and the valve lifting arrangement following the cam profile defined by the peak of the nose.

The feed line comprising the inlet duct and the flow duct may be provided with a non-return valve so as to ensure that sufficient pressure in the chamber remains and to provide a further variation for the advanced timing function.

The distal end part of the piston device relative to the guide member is designed so that together with the body part it defines a hydraulic medium chamber which can be selectively filled for controlling the closing of the inlet valve independent on the means for adjusting timing of valve opening of the inlet valve. As noted above, hereby a delay function, known as such, for closing of the valve may be provided and utilised as desired independent on the scavenging.

### Brief Description of Drawings

In the following the invention will be described, by way of example only, with reference to the accompanying schematic drawings, in which
- Figure 1 shows a piston engine and a skeleton diagram of its valve mechanism,
- Figures 2 - 6 show an embodiment of a control arrangement according to the invention in separate consecutive stages of operation in a mode providing advance of timing of valve opening of the inlet valve,
- Figures 2a - 6a show enlargements of the respective Figures 2 - 6,
- Figures 7 - 9 show the embodiment of Figures 2 - 6 in separate consecutive stages of operation in another mode involving no advance of timing of valve opening of the inlet valve, and
- Figure 10 shows relative opening curves of the inlet and exhaust valves in accordance with the invention.

### Detailed Description of Drawings

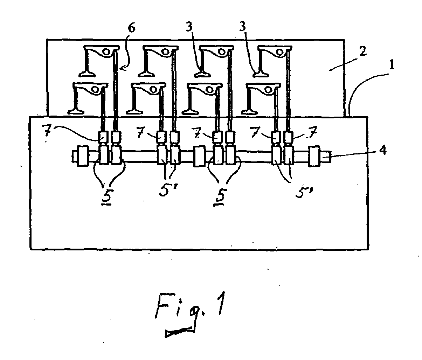

Figure 1 shows a schematic view of a piston engine 1 as far as it is relevant to the understanding of the invention. The gas exchange of the cylinders (not shown) in the piston engine 1 is carried out under the control of gas exchange valves, i.e. inlet valves and exhaust valves, located on a cylinder head 2. Only inlet valves 3 are shown and they are operated by means of valve mechanisms 6 which are typically guided by cam profiles 5' of cam devices 5 arranged on a camshaft 4 of the engine. The force transmission connection between each valve mechanism 6 and the corresponding cam device 5 is realised by a control arrangement 7.

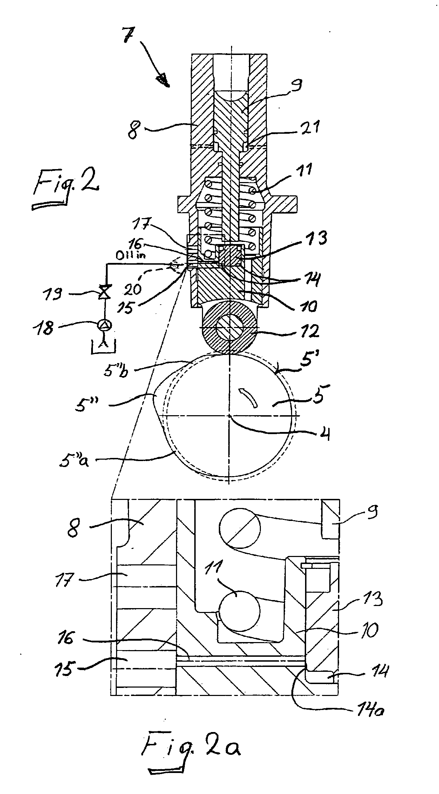

The control arrangement 7 is shown in more detail in Figures 2 - 6 and in the enlargements in Figures 2a - 6a relating thereto. The control arrangement 7 comprises a body part 8, which is typically attached to the engine body. A piston device 9 is movably arranged within the body part 8. The upper end of the piston device 9 is arranged in force transmission connection with the valve mechanism 6 (not shown closer). This connection may be mechanical or hydraulic. The movements of the piston device 9 are controlled by a guide member 10 arranged at the lower end of the piston device 9 within the body part 8. The guide member 10 is in engagement with and urged by a spring 11 towards a roller 12, which receives its guidance from the cam profile 5' of the cam device 5. Thus, when the cam shaft 4 rotates, in Figures 2 - 6 counter-clockwise, the roller 12 follows the cam profile 5' of the cam device 5, and the changes in the cam profile 5' are transmitted so as to affect the opening and closing of the inlet valve 3. The guide member 10 is provided with an auxiliary piston 13 movably fitted within it and which together with the guide member 10 define a chamber 14, into which hydraulic medium can be selectively fed for providing an advance in the time of opening of the inlet valve 3. The body part 8 is provided with an inlet duct 15 and an outlet duct 17 spaced apart along the movement of the guide member 10 and arranged in turn in communication with the chamber 14 through a flow duct 16 arranged in the guide member 10. The feed line is provided with pumping means 18, a shut-off valve 19 and an optional non-return valve 20. By means of the shut-off valve 19 the feed line to the chamber 14 may be connected or disconnected, depending on whether or not the aim is to use the advanced timing function for the opening of the inlet valve 3.

The cam profile 5' includes a nose 5" extending upwards from the base circle and being arranged to move the piston device 9 upwards in the figures for providing opening of the inlet valve 3. In accordance with the invention the nose 5" is of asymmetric design so that it has a first portion 5"a extending along the cam profile 5' of the cam device from its peak in the direction of rotation a distance which is substantially longer than a second portion 5"b extending in the opposite direction from the peak of the nose 5" respectively. The effect of the design of the nose 5" as well as the operation of the control arrangement will be explained in the following.

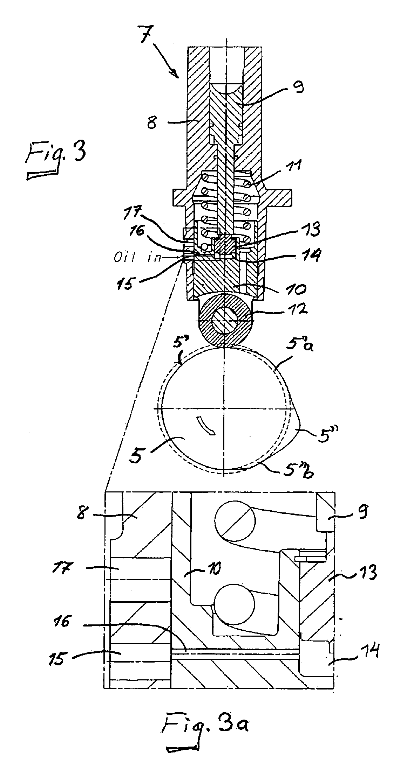

Figure 2 shows the control arrangement in a state, in which the inlet valve 3 in connection therewith has just been closed, the roller 12 being no longer affected by the nose 5" of the cam and specifically the portion 5"b of it. In order to make use of the advanced timing function hydraulic medium, preferably oil from some system of the engine, is fed through the ducts 15 and 16 into the chamber 14. In this position the connection between the duct 16 and the chamber 14 is determined only through a small gap 14a, which is part of the chamber 14 and can be more clearly seen in Figure 2a. Notwithstanding, when the cam device 5 rotates further to the position of Figure 3, the chamber is filled with hydraulic oil causing the auxiliary piston 13 to move upwards in the figures, whereby its bottom surface is disengaged from the guide member 10 and its top surface engages the lower end of the piston device 9. As a consequence, when the roller 12 moves further, at the position of the portion 5"b of the nose it causes the auxiliary piston 13 and the piston device 9 to move upwards. Then the position of the piston device 9 is higher than normal, i.e. when the advanced timing function is not utilised, and the difference is determined by the gap between the bottom surface of the auxiliary piston 13 and the guide member 10.

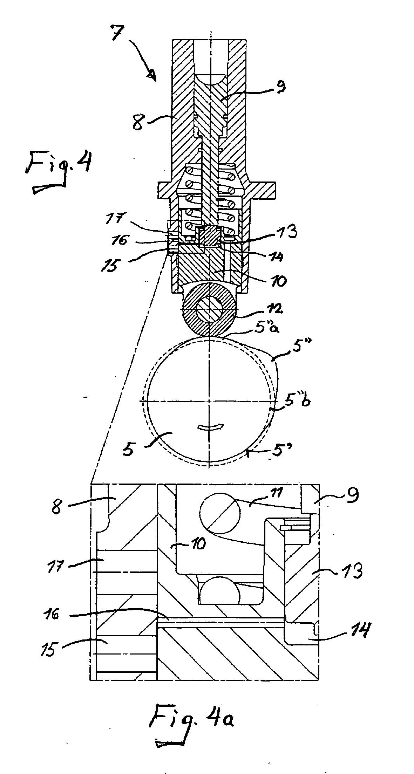

As can be seen from Figure 4 some hydraulic oil is pressed back to the feed line before the communication between the ducts 15 and 16 is closed, whereby the gap between the bottom surface of the auxiliary piston 13 and the guide member 10 will be slightly decreased. This relates to the case when there is no non-return valve 20 provided. The role of the non-return valve 20 is to prevent the hydraulic oil being pressed back in the feed line, whereby the gap between the bottom surface of the auxiliary piston 13 and the guide member 10 will be larger and the lift caused to the inlet valve 3 will be bigger and takes place earlier respectively. As a consequence also the scavenging of the cylinder will be more efficient.

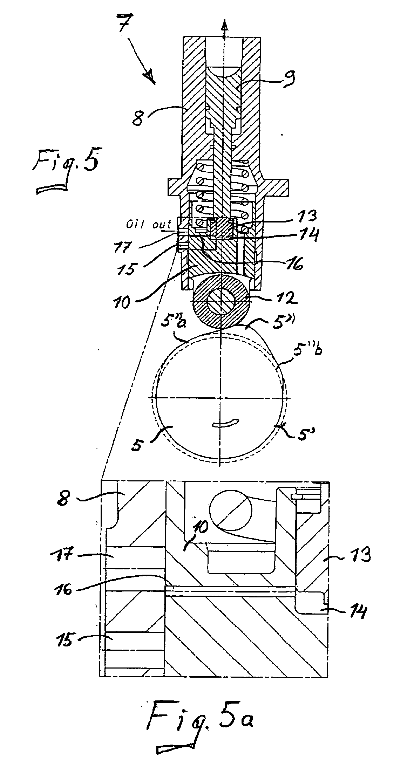

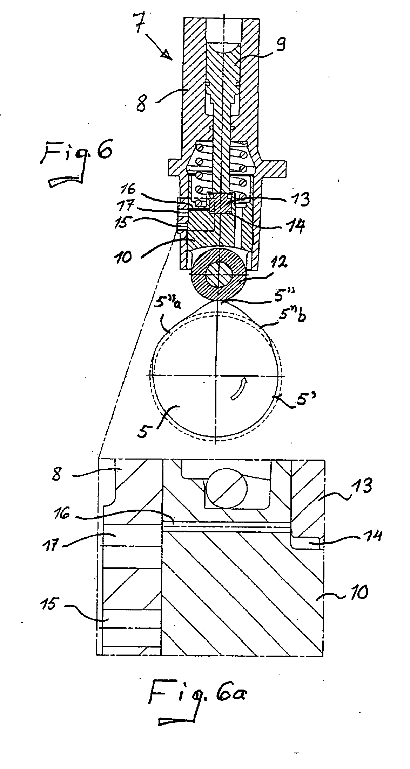

In the situation of Figure 5 the duct 16 is moved to the position of the duct 17, whereby the communication between the chamber 14 and the duct 17 is established and the pressure in the chamber 14 is released. Thereafter the lifting movement follows in a normal way and the closing of the inlet valve 3 occurs after the peak of the nose 5" has been reached (cf. Figure 6) and will be further determined by the second portion 5"b of the nose 5". This being the case, if desired, closing of the inlet valve may be effected independent on the advanced timing of valve opening of the inlet valve. This can with advantage be implemented by means of the piston device 9. For this purpose a chamber 21 defined by the piston device 9 together with the body part 8 may be utilised as a pressure chamber in a way known as such by providing it with inlet and outlet ducts (shown only schematically by dotted lines in Figure 2). Reference is made to the document WO 2008/000899A1, which is hereby incorporated by reference, describing some alternative ways of implementing such an arrangement.

As can be understood from the description of figures 2 - 5 above, the location of the ducts 15 and 17 with regard to the lifting movement of the guide member 10 affects the timing of valve opening of the inlet valve 3. Thus, the location should be selected such that a desired timing can be achieved.

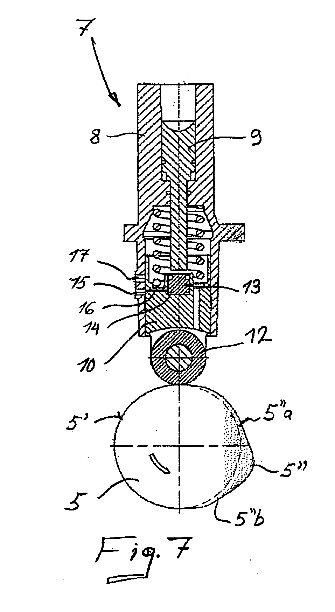

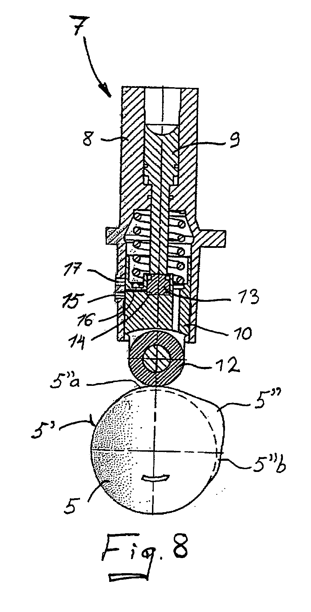

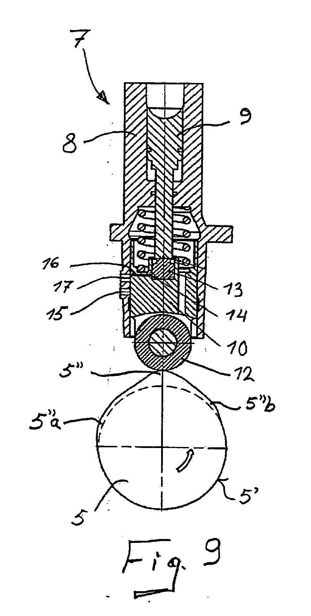

As noted above the mode providing advance of timing of valve opening of the inlet valve 3 may be turned off e.g. by means of the shut-off valve 19, whereby no hydraulic oil is fed into the chamber 14. The cycle is illustrated by means of the Figures 7 - 9. As can be seen from Figure 7, in this case there is a gap between the auxiliary piston 13 and the end part of the piston device 9. So when the roller 12 moves to the position of the portion 5"a of the nose 5", the guide member 10 moves upwards and closes first said gap. Only thereafter will the upward movement of the piston device 9 begin. Thus it will be understood that this delay in the upward movement of the piston device 9 represents the difference between the two modes, i.e. whether or not the advanced timing function is utilised.

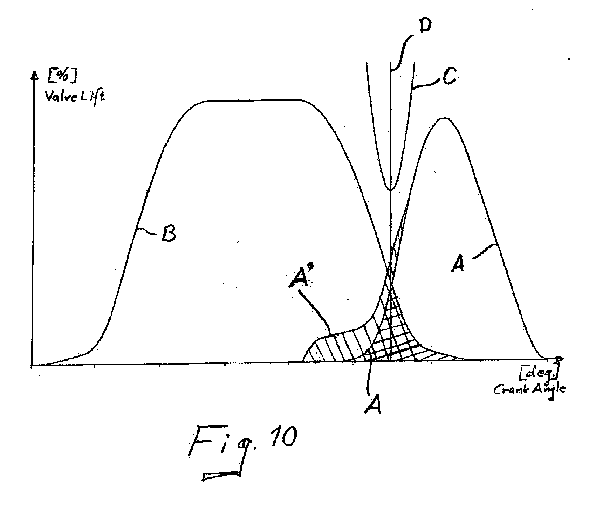

The operation of the embodiment of the figures and its effect on the opening and closing of the inlet valve of the engine and on the scavenging of the cylinder is illustrated in Figure 10 showing the relative opening curves of both the exhaust valve and the inlet valve as a function of the crank angle of the engine. In Figure 10 the curves A and A' represent inlet valve movement under different modes so that the curve A represents normal mode, and the curve A' the advanced timing of valve opening of the inlet valve. The curve B represents exhaust valve movement and the curve C engine piston movement relating to the cylinder in association with the inlet valve in question. In addition the line D indicates Top Dead Center of the engine piston. As can be seen the advanced timing function provides for a more extensive overlapping of the common opening time of the inlet valve and the exhaust valve, which is illustrated by the area remaining between the curves A and A'. This means more efficient scavenging of the cylinder.

The invention is not limited to the embodiment described above but can be implemented in many other different ways within the scope of the attached claims.

## Claims

1. A control arrangement for gas exchange in a piston engine operable with a cam device (5) of a camshaft (4) of the engine (1) and cooperating with an inlet valve mechanism (6) for opening and closing the inlet valve (3) in association with a cylinder of the engine, which control arrangement (7) comprises a body part (8), in which a piston device (9) is movably arranged to be in force transmission connection with the cam device (5) and the valve mechanism (6), and a guide member (10) arranged in the body part (8) between the cam device (5) and the piston device (9) to be movably responsive with the movements of the cam device (5), the control arrangement including means for adjusting timing of valve opening of the inlet valve, **characterised in that** the guide member (10) is provided with an auxiliary piston (13) movably arranged between the guide member (10) and the piston device (9) and together with the guide member (10) defining a chamber (14), that the body part (8) is provided with an inlet duct (15) and an outlet duct (17) spaced apart along the movement of the guide member (10) and arranged in turn in communication with said chamber (14) through a flow duct (16) arranged in the guide member (10), that for selecting advanced timing of the valve opening of the inlet valve (3) said chamber (14) is filled with hydraulic medium via said inlet duct (15) during the closing time of the inlet valve (3) to cause relative movement of the auxiliary piston (13) towards the piston device (9), and that hydraulic medium is discharged from the chamber (14) during the lifting movement of the inlet valve (3) via said outlet duct (17) whereby the lift of the inlet valve (3) in the peak phase of the opening of the inlet valve remains at least substantially unchanged.

2. A control arrangement according to claim 1, **characterised in that** the cam device (5) is provided with a nose (5") of asymmetric design so that it has a first portion (5"a) extending along the cam profile (5') of the cam device (5) from its peak in the direction of rotation a distance which is substantially longer than a second portion (5"b) extending in the opposite direction from the peak respectively, the beginning part of the first portion (5"a) of the nose (5") being arranged to determine the advanced timing of valve opening of the inlet valve (3).

3. A control arrangement according to claim 1 or 2, **characterised in that** depending on the selected timing of valve opening of the inlet valve (3) the auxiliary piston (13) is a bit spaced apart from either the piston device (9) or the guide member (10) when the inlet valve (3) is at its closed position.

4. A control arrangement according to claim 1 or 2, **characterised in that** the feed line comprising the inlet duct (15) and the flow duct (16) is provided with a non-return valve (20).

5. A control arrangement according to any one of the preceding claims, **characterised in that** the distal end part of the piston device (9) relative to the guide member (10) is designed so that together with the body part (8) it defines a hydraulic medium chamber (21) which can be selectively filled for controlling the closing of the inlet valve (3) independent on the means for adjusting timing of valve opening of the inlet valve.

## Patentansprüche

1. Steueranordnung für den Gaswechsel in einem Kolbenmotor, die mit einer Nockenvorrichtung (5) einer Nockenwelle (4) des Motors (1) betrieben werden kann und mit einem Einlassventilmechanismus (6) zum Öffnen und Schließen des Einlassventils (3) in Verbindung mit einem Zylinder des Motors zusammenwirkt, wobei die Steueranordnung (7) einen Körperteil (8) umfasst, in dem eine Kolbenvorrichtung (9) so beweglich eingerichtet ist, dass sie in einer Kraftübertragungsverbindung mit der Nockenvorrichtung (5) und dem Ventilmechanismus (6) steht, sowie ein Führungselement (10) umfasst, das in dem Körperteil (8) so zwischen der Nockenvorrichtung (5) und der Kolbenvorrichtung (9) eingerichtet ist, dass es als Reaktion auf die Bewegungen der Nockenvorrichtung (5) beweglich ist, wobei die Steueranordnung ein Mittel zur Regulierung des Timings der Ventilöffnung des Einlassventils umfasst, **dadurch gekennzeichnet, dass** das Führungselement (10) mit einem Hilfskolben (13) versehen ist, der beweglich zwischen dem Führungselement (10) und der Kolbenvorrichtung (9) eingerichtet ist und zusammen mit dem Führungselement (10) eine Kammer (14) definiert; dass der Körperteil (8) mit einem Einlasskanal (15) und einem Auslasskanal (17) versehen ist, die entlang der Bewegung des Führungselements (10) beabstandet sind und durch einen Fließkanal (16), der in dem Führungselement (10) eingerichtet ist, der Reihe nach mit der Kammer (14) in Verbindung angeordnet werden; dass die Kammer (14) zur Wahl eines vorgezogenen Timings der Ventilöffnung des Einlassventils (3) während der Verschlusszeit des Einlassventils (3) über den Einlasskanal (15) mit einem Hydraulikmedium gefüllt wird, um eine relative Bewegung des Hilfskolbens (13) zu der Kolbenvorrichtung (9) zu verursachen; und dass das Hydraulikmedium während der Hebebewegung des Einlassventils (3) über den Auslasskanal (17) aus der Kammer (14) abgelassen wird, wodurch die Hebung des Einlassventils (3) in der Spitzenphase der Öffnung des Einlassventils zumindest im Wesentlichen unverändert bleibt.

2. Steueranordnung nach Anspruch 1, **dadurch gekennzeichnet, dass** die Nockenvorrichtung (5) mit einem Ansatz (5") mit einer derart unsymmetrischen Gestaltung versehen ist, dass dieser einen ersten Abschnitt (5"a) aufweist, welcher sich entlang des Nockenprofils (5') der Nockenvorrichtung (5) von dessen Spitze über eine Entfernung erstreckt, die wesentlich länger als ein zweiter Abschnitt (5"b) ist, der sich von der Spitze entsprechend in die entgegengesetzte Richtung erstreckt, wobei der Anfangsteil des ersten Abschnitts (5"a) des Ansatzes (5") eingerichtet ist, um das vorgezogene Timing der Ventilöffnung des Einlassventils (3) zu bestimmen.

3. Steueranordnung nach Anspruch 1 oder 2, **dadurch gekennzeichnet, dass** der Hilfskolben (13) abhängig von dem gewählten Timing der Öffnung des Einlassventils (3) entweder von der Kolbenvorrichtung (9) oder von dem Führungselement (10) ein wenig beabstandet ist, wenn sich das Einlassventil (3) in seiner geschlossenen Stellung befindet.

4. Steueranordnung nach Anspruch 1 oder 2, **dadurch gekennzeichnet, dass** die Zufuhrleitung, die den Einlasskanal (15) und den Fließkanal (16) umfasst, mit einem Rückschlagventil (20) versehen ist.

5. Steueranordnung nach einem der vorhergehenden Ansprüche, **dadurch gekennzeichnet, dass** der distale Endteil der Kolbenvorrichtung (9) in Bezug auf das Führungselement (10) so gestaltet ist, dass er zusammen mit dem Körperteil (8) eine Hydraulikmediumkammer (21) definiert, die selektiv gefüllt werden kann, um das Schließen des Einlassventils (3) unabhängig von dem Mittel zur Regulierung des Timings der Ventilöffnung des Einlassventils zu steuern.

## Revendications

1. Dispositif de commande pour la distribution d'essence dans un moteur à piston pouvant fonctionner avec un dispositif à cames (5) d'un arbre à cames (4) du moteur (1) et coopérant avec un mécanisme de soupape d'admission (6) pour ouvrir et fermer la soupape d'admission (3) en association avec un cylindre du moteur, lequel dispositif de commande (7) comprend une partie de corps (8) dans laquelle un dispositif à pistons (9) est agencé de manière mobile pour être en liaison de transmission de force avec le dispositif à cames (5) et le mécanisme de soupape (6), et un élément-guide (10) agencé dans la partie de corps (8) entre le dispositif à cames (5) et le dispositif à pistons (9) pour répondre de manière mobile aux mouvements du dispositif à cames (5), le dispositif de commande comprenant un moyen pour régler la temporisation d'ouverture de la soupape d'admission, **caractérisé en ce que** l'élément-guide (10) est doté d'un piston auxiliaire (13) agencé de manière mobile entre l'élément-guide (10) et le dispositif à pistons (9) et définissant une chambre (14) conjointement avec l'élément-guide (10), **en ce que** la partie de corps (8) est dotée d'un conduit d'admission (15) et d'un conduit de sortie (17) espacés l'un de l'autre le long du mouvement de l'élément-guide (10) et agencés en retour en communication avec la chambre (14) via un conduit d'écoulement (18) agencé dans l'élément-guide (10), que pour sélectionner la temporisation avancée de l'ouverture de la soupape d'admission (3), la chambre (14) est remplie d'agent hydraulique via le conduit d'admission (15) pendant le temps de fermeture de la soupape d'admission (3) pour provoquer le mouvement relatif du piston auxiliaire (13) en direction du dispositif à pistons (9), et **en ce que** du fluide hydraulique est déchargé de la chambre (14) pendant le mouvement de soulèvement de la soupape d'admission (3) via le conduit de sortie (17), ce par quoi le soulèvement de la soupape d'admission (3) dans la phase de crête de l'ouverture de la soupape d'admission reste au moins essentiellement inchangé.

2. Dispositif de commande selon la revendication 1, **caractérisé en ce que** le dispositif à cames (5) est doté d'un embout (5") de conception asymétrique, de façon à ce qu'il présente une première partie (5"a) qui s'étend le long du profilé de came (5') du dispositif à cames (5) depuis son sommet dans le sens de rotation, d'une distance qui est essentiellement plus longue qu'une seconde partie (5"b) s'étendant dans la direction opposée depuis le sommet respectivement, la partie débutante de la première partie (5"a) de l'embout (5") étant agencée pour déterminer la temporisation avancée de l'ouverture de la soupape d'admission (3).

3. Dispositif de commande selon la revendication 1 ou 2, **caractérisé en ce qu'**en fonction de la temporisation sélectionnée de l'ouverture de la soupape d'admission (3), le piston auxiliaire (13) est légèrement espacé, soit du dispositif à pistons (9), soit de l'élément-guide (10), lorsque la soupape d'admission (3) est dans sa position fermée.

4. Dispositif de commande selon la revendication 1 ou 2, **caractérisé en ce que** la ligne d'alimentation comprenant le conduit d'admission (15) et le conduit d'écoulement (16) est dotée d'un clapet de non-retour (20).

5. Dispositif de commande selon l'une quelconque des revendications précédentes, **caractérisé en ce que** la partie d'extrémité distale du dispositif à pistons (9) par rapport à l'élément-guide (10) est conçue de façon à ce que, conjointement avec la partie de corps (8), elle définisse une chambre de fluide hydraulique (21) qui peut être sélectivement remplie pour commander la fermeture de la soupape d'admission (3) indépendamment du moyen pour régler la temporisation d'ouverture de la soupape d'admission.
